# EUROPEAN PATENT APPLICATION

(11) **EP 4 549 882 A1**
(43) Date of publication of application: **07.05.2025**
(21) Application number: 23275155.2
(22) Date of filing: 02.11.2023
(51) Int. Cl.: G01D 5/244, G01D 5/347

(54) **ROTARY ENCODER DEVICE AND METHOD OF MOUNTING A ROTARY ENCODER DEVICE ON A MACHINE**

(71) Applicant: Renishaw PLC, Wotton-under-Edge, Gloucestershire GL12 8JR (GB)
(72) Inventor: The designation of the inventor has not yet been filed
(74) Representative: Rolfe, Edward William

(57) **Abstract**

A rotary encoder device comprising a stator and a rotor which are rotatable relative to each other about an axis of rotation, one of which comprises a scale and the other of which comprises a readhead for reading the scale via which the relative rotational position of the stator and rotor about said axis can be determined, wherein the stator and rotor are configured with cooperating radial-alignment features that are configured such that: at a first relative axial position of the stator and rotor the cooperating radial-alignment features are engageable so as thereby to constrain the stator and rotor at a predetermined relative radial position, and at a second relative axial position of the stator and rotor the cooperating radial-alignment features are not engageable, wherein the readhead can read the scale at said second relative axial position.

## Description

The present invention relates to a rotary encoder device and a method of mounting a rotary encoder device on a machine.

A rotary encoder device comprises a stator and a rotor which are rotatable relative to each other about an axis of rotation. One of the stator and rotor comprises a scale and the other comprises a readhead for reading the scale via which the relative rotational position of the stator and rotor about said axis can be determined. Typically, the stator comprises the readhead and the rotor comprises the scale, but this need not necessarily be the case. In use, the rotor is mounted to a relatively rotatable part (e.g. shaft) of a machine and the stator is mounted to a relatively fixed part of the machine, such that the axis of rotation of the relatively rotatable part of the machine and axis of rotation of the rotary encoder device are substantially coaxial. As such, the encoder can be used to measure rotation of the relatively rotatable part of the machine.

During installation of the rotary encoder device on a machine, it can be important to ensure that the stator and rotor are mounted to the machine such that the stator and rotor are at a preferred radial arrangement.

US9664537 describes an encoder assembly and a separate encoder alignment structure which is slid onto the encoder's stator and rotor part in order to engage them and constrain them at a predetermined relative configuration so as to align an index mark with an index sensor.

The present invention relates to an improved rotary encoder device and an improved method of installing a rotary encoder device on a machine.

In particular the present invention relates to a rotary encoder device comprising a stator and a rotor which are rotatable relative to each other about an axis of rotation, one of which comprises a scale and the other of which comprises a readhead for reading the scale via which the relative rotational position of the stator and rotor about said axis can be determined. The stator and rotor are configured with cooperating radial-alignment features. The cooperating radial-alignment features can be configured such that at a first relative axial position of the stator and rotor the cooperating radial-alignment features are engageable so as thereby to constrain the relative radial position of the stator and rotor at a predetermined radial position. The cooperating radial-alignment features can also be configured such that they are not engageable when the stator and rotor are at a second relative axial position.

In accordance with a first aspect of the invention there is provided a rotary encoder device comprising a stator and a rotor which are rotatable relative to each other about an axis of rotation, one of which comprises a scale and the other of which comprises a readhead for reading the scale via which the relative rotational position of the stator and rotor about said axis can be determined, wherein the stator and rotor are configured with cooperating radial-alignment features that are configured such that: at a first relative axial position of the stator and rotor the cooperating radial-alignment features are engageable so as thereby to constrain the stator and rotor at a predetermined relative radial position, and at a second relative axial position of the stator and rotor the cooperating radial-alignment features are not engageable, wherein the readhead can read the scale at said second relative axial position.

Accordingly, a user can cause the stator and rotor (and hence the scale and readhead provided thereon) to be set at a predetermined radial position by arranging the stator and rotor such that the cooperating radial-alignment features engage each other at said first relative axial position (a "setup relative axial position"). This can be useful during installation of the rotary encoder device, either the first time it is installed on any machine or at any subsequent time during reinstallation of the rotary encoder device (e.g. during installation on the same machine after maintenance, or during installation on a different machine). The present invention means that no separate alignment components are needed to achieve the relative radial alignment, thereby simplifying manufacture and installation, reducing costs and/or removing the need for the user to keep and find such separate alignment components for subsequent alignment (e.g. for reinstallation of the encoder device). Once radially aligned, the user can then arrange the stator and rotor at the second relative axial position (an "operational relative axial position") at which the cooperating radial-alignment features are not engageable. Accordingly, at the second ("operational") relative axial position, the rotary encoder device can be used/operated without the cooperating radial-alignment features being in engagement or becoming engaged due to relative rotation of the stator and rotor. Accordingly, at the second relative axial position, the stator and rotor are free to fully rotate about the axis of the rotation without the cooperating radial-alignment features being in engagement or becoming engaged due to relative rotation of the stator and rotor.

Preferably the rotary encoder apparatus is configured such that at the first ("setup") relative axial position of the stator and rotor, the cooperating radial-alignment features are engageable so as to form an interference fit. In other words, when in their engaged state at the first relative axial position, preferably the cooperating radial-alignment features are configured so as to form an interference fit. Accordingly, preferably the stator and rotor can be held in an engaged state at the first relative axial position by way of frictional force between the cooperating radial-alignment features. Preferably the rotary encoder apparatus is configured such that the interference fit/frictional force between the cooperating radial-alignment features is sufficient to support the weight of the rotor or stator, whichever is the heavier, such that the cooperating radial-alignment features (and hence the rotor and stator) do not automatically disengage under their own weight.

In a preferred embodiment, preferably the rotary encoder apparatus is configured (e.g. the cooperating radial-alignment features are configured) such that the cooperating radial-alignment features can be engaged manually by hand. In a preferred embodiment, preferably the rotary encoder apparatus is configured (e.g. the cooperating radial-alignment features are configured) such that the relative displacement force required to be applied to the stator and rotor in order to cause the cooperating radial-alignment features to form an interference fit is not more than 150 newtons (N) (in the case of a linear engagement) or 20 newton-metres (Nm) (in the case of rotary engagement). In a particularly preferred embodiment preferably the rotary encoder apparatus is configured (e.g. the cooperating radial-alignment features are configured) such that the interference fit can be formed by applying a relative axial-displacement force on the stator and rotor of not more than 150 N.

The rotary encoder device can be configured such that when in their engaged state, the cooperating radial-alignment features provide a (e.g. first) set of contact points (between the stator and rotor). The (e.g. first) set of contact points can comprise points of contact between the stator and rotor, for instance at at least two, preferably at at least three different/discrete positions around the axis of rotation. It can be preferred that at least two of said points of contact are configured to be radially rigid. It can be preferred that at least one of said points of contact is configured to be resiliently radially compliant (and configured to bias/force the rotor and stator into said at least two radially rigid points of contact when in their engaged state). For instance, at least one of said points of contact can be configured to be part of/provided by or on an elastically deformable member. For example, at least one of said points of contact can be configured to be part of/provided by or on a flexure.

A particularly preferred configuration is that at least one of said points of contact is configured to be resiliently radially compliant and at least two of said points of contact are configured to be radially rigid (e.g. are part of/provided by or on a radially rigid member). An especially preferred configuration is that the (e.g. first) set of contact points comprises only two rigid points of contact (at different/discrete positions around the axis of rotation) and at least one (and preferably only one) resiliently radially compliant point of contact which is configured to bias/force the rotor and stator into said radially rigid points of contact when in their engaged state. It can be preferred that the rotary encoder device is configured such that all of the contact points in said (e.g. first) set are all located on the same axial side of the scale. It can be preferred that the rotary encoder device is configured such that all of the contact points in said (e.g. first) set are all located in a plane that extends perpendicular to the axis of rotation.

The rotary encoder device can be configured such that when in their engaged state, in addition to said (first) set of contact points, the cooperating radial-alignment features also provide a second set of contact points. The first and second sets of contact points can be located at different axial positions. For example, it can be preferred that the rotary encoder device is configured such that all of the contact points in said second set are all located on the same axial side of the scale as each other, and are located on a different axial side of the scale to all of the points of contact in said first set of contact points. In other words, it can be preferred that all of the points of contact in the first set are located on a first axial side of the scale, and all of the points of contact in the second set are located on a second axial side of the scale (that is on the opposite side of the scale to the first axial side).

Preferably, the points of contact between the stator and rotor in the (first) set of contact points are located in a first plane that extends perpendicular to the axis of rotation. Preferably, the points of contact between the stator and rotor in the second set of contact points are located in a second plane that extends perpendicular to the axis of rotation. Preferably, the first and second planes are located at different axial positions (and as per the previous paragraph, said first and second planes are preferably located on different axial sides of the scale - but it should be noted that they don't necessarily have to be on different axial sides of the scale).

As per the first set of contact points, the second set of contact points can comprise points of contact between the stator and rotor, for instance at at least two, preferably at at least three different/discrete positions around the axis of rotation.

It can be preferred that at least two of said points of contact are configured to be radially rigid. It can be preferred that at least one of said points of contact is configured to be resiliently radially compliant (and configured to bias/force the rotor and stator into said at least two radially rigid points of contact when in their engaged state). A particularly preferred configuration is that at least one of said points of contact is configured to be resiliently radially compliant and at least two of said points of contact are configured to be radially rigid. An especially preferred configuration is that the second set of contact points comprises only two rigid points of contact (at different/discrete positions around the axis of rotation) and at least one (and preferably only one) resiliently radially compliant point of contact which is configured to bias/force the rotor and stator into said radially rigid points of contact when in their engaged state. It can be preferred that the rotary encoder device is configured such that all of the contact points in said second set are all located on the same axial side of the scale, and for instance are all located in a plane that extends perpendicular to the axis of rotation.

As will be understood, the cooperating radial-alignment features can comprise one or more radial-alignment features on the stator and one or more radial-alignment features on the rotor, e.g. configured to provide said set(s) of points of contact at the first relative axial position. The radial-alignment feature on one of the stator and rotor can comprise a continuous annular feature (i.e. a feature that extends continuously and completely around the axis of rotation) and the radial-alignment features on the other of the stator and rotor can comprise discrete features at at least two, and preferably at at least three different positions about the axis of rotation. In line with preferred embodiments of the invention, the effective diameters provided by the cooperating radial-alignment features on the stator and rotor can be such that they form an interference fit at said first relative axial position.

The stator's radial alignment feature(s) could be provided on a radial alignment member, e.g. which is formed separately from and attached to a main body of the stator. Multiple radial alignment features could be provided on said radial alignment member. In accordance with a preferred embodiment of the invention, the radial alignment member can comprise a resiliently radial compliant (e.g. spring/flexure) portion on which at least one of the radial alignment features is provided. Accordingly, in accordance with a preferred embodiment of the invention, the radial alignment member can be configured to provide at least one resiliently radially compliant point of contact and at least one radially rigid point of contact. The radial alignment member could be a planar (e.g. plate-like) member. Providing multiple radial alignment features on one radial alignment member can be beneficial over the providing separate radial alignment members which are attached to the main body of the stator because it can help reduce cost, and increase ease of manufacture and assembly.

In a preferred embodiment, the cooperating radial-alignment features are engageable and disengageable by relative axial displacement/motion alone of the stator and rotor between the first and second relative axial positions. In alternative embodiments, additional displacement(s)/motion(s) such as relative rotation of the stator and rotor could be required in order to engage and/or disengage the cooperating radial-alignment features. Nevertheless, it has been found that requiring relative axial displacement/motion only to engage and to disengage the cooperating radial-alignment features can be preferred and advantageous (e.g. due to reasons of efficiency, and for example due to reasons of simplicity of use and manufacture).

The rotary encoder device could be an enclosed rotary encoder device (also known as a "sealed" rotary encoder device). The enclosed ("sealed") rotary encoder device can comprise an integral protective housing within which at least the scale of the rotor and the readhead of the stator is located. One or more seals between the rotor and stator can be provided. Together the integral protective housing and seals protect the scale and readhead from external contamination. As will be understood, the invention is not limited to such enclosed/sealed rotary encoder devices and can also be used with encoder devices that are not enclosed/sealed (which are referred to as "open" encoders). The stator's radial-alignment features can be formed as an integral part of the integral protective housing, or could be formed separately and attached thereto. Similarly, the rotor's radial alignment features (e.g. the above-described radial alignment member) could be formed as an integral part of the rotor, or could be formed separately and attached thereto.

It could be that the readhead is not able to read the scale when the stator and rotor are at the first relative axial position. As will be understood, it might not be important/necessary for the readhead to be able to read the scale when the stator and rotor are at the first relative axial position, because the encoder device is merely being set up when they are in that configuration. Nevertheless, it could be that at the first relative axial position of the stator and rotor the readhead is able to read the scale. It could be that at the first relative axial position of the stator and rotor the readhead is able to read the scale, but that the readhead and scale have a preferred/superior (e.g. optimum) reading configuration/ability when at the stator and rotor are at their second relative axial position. Again, this is not necessary and it might be the case that the readhead is able to read the scale equally well at the first and second relative axial positions of the stator and rotor.

In a preferred embodiment, the rotary encoder device is provided without any integral position-constraining bearings between the stator and rotor when at their second relative axial position. In such a case, a device external to the rotor and stator is required to guide relative rotation of the rotor and stator when at their second relative axial position. Such a device external to the rotor and stator can be a machine on which the rotary encoder device is to be mounted. For instance, such a device external to the rotor and stator can comprise a static part (on which the stator is mounted) and a rotatable machine part (e.g. shaft) (on which the rotor is mounted). As will be understood, in embodiments in which rotary seals are provided between the rotor and stator, such rotary seals are not to be considered as position-constraining bearings. Indeed, such rotary seals are not configured to constrain the position between the two, but instead are configured to permit changes in position, both axial and radial, and still function as seals.

According to a second aspect of the invention there is provided an apparatus comprising a machine having a static part and a rotatable shaft, and a rotary encoder device according to any of the preceding claims, wherein the stator is mounted (e.g. secured/fastened) to the static part of the machine and the rotor is mounted (e.g. secured/fastened) to the rotatable part (e.g. shaft) of the machine. The stator can be rigidly mounted (e.g. secured/fastened) to the static part of the machine and the rotor can be rigidly mounted (e.g. secured/fastened) to the rotatable part of the machine such that relative rotation of the rotor and stator when at their second relative axial position is guided solely by the static part of the machine and the rotatable part of the machine.

According to a third aspect of the invention there is provided a method of mounting to a machine having a static part and a rotatable part (e.g. shaft), a rotary encoder device according to any of the preceding claims, the method comprising, in any suitable order: configuring the rotary encoder device such that the rotary encoder device is located on the machine such that its rotor is arranged on the machine's rotatable part and such that the rotary encoder device's rotor and stator are arranged at their first relative axial position such that their cooperating radial-alignment features are engaged such that radial position of the stator is dictated by said cooperating radial-alignment features; securing/fastening the stator to the static part of the machine (e.g. via one or more fastening means/members, such as a clamp, threaded fastener, adhesive, etc) at the radial position dictated by the cooperating radial-alignment features; and disengaging the rotor and stator's cooperating radial-alignment features and arranging the rotor and stator are at their second relative axial position such that the rotor and stator are free to rotate relative to each other.

Said disengaging step could take place before, after or during said step of securing the stator to the static part of the machine. Nevertheless, to help ensure that the stator doesn't move relative to the rotor during the step of securing/fastening the stator to the static part of the machine, it can be preferred that the disengaging step does not take place beforehand (and for instance takes place afterwards).

The method can additionally comprise securing/fastening the rotor to the rotatable part of the machine (e.g. via one or more fastening means/members, such as a clamp, threaded fastener, adhesive, etc). This could take place before, after or during said step of securing the stator to the static part of the machine. In a preferred embodiment, the step of securing the rotor to the rotatable part of the machine takes place contemporaneously with the step of disengaging the rotor's and stator's cooperating radial-alignment features. That is, for example, securing the rotor to the rotatable part of the machine can also act to disengage the rotor's and stator's cooperating radial-alignment features.

Preferably the rotor is a radially-snug fit on the rotatable part of the machine, such that the rotor's radial position is constrained at a predetermined radial position relative to the rotatable part of the machine (i.e. even before the rotor is secured/fastened to the rotatable part of the machine).

Embodiments of the invention will now be described, by way of example only, with reference to the following drawings in which:
Figure 1 is an isometric view of an example rotary encoder device according to the present invention;
Figure 2 is an exploded diagram of the rotary encoder device shown in Figure 1;
Figure 3 is a side elevation view of the rotor of the rotary encoder device of Figures 1 and 2;
Figure 4 is an isometric view of a radial-alignment plate of the rotary encoder device of Figures 1 and 2;
Figure 5 is an isometric view of the radial-alignment plate of Figure 4 mounted to the stator of the rotary encoder device of Figures 1 and 2 via a retaining plate;
Figure 6(a) is a cross-sectional view of the rotary encoder device of Figure 1 and 2 taken at a plane containing the first radial-alignment plate of the stator;
Figure 6(b) is a section view taken along line B-B of Figure 6(a) wherein the right-hand side of Figure 6(b) illustrates the relative configuration of the stator and rotor at a first ("setup") relative axial position at which the cooperating radial-alignment features are engaged, and the left-hand side of Figure 6(b) illustrates the relative configuration of the stator and rotor at a second ("operational") relative axial position at which the cooperating radial-alignment features are disengaged;
Figure 6(c) is a plan view of an alternative embodiment of a radial alignment plate;
Figure 7 is a plan view of an alternative embodiment of a radial alignment plate;
Figure 8 is a flow chart of an example process for mounting a rotary encoder device according to the present invention to machine;
Figures 9(a) and 9(b) show isometric views of the rotary encoder device of Figures 1 and 2 and a machine on which it is (to be) mounted, and Figure 9(c) is a cross-sectional view through the rotary encoder device mounted on a machine;
Figure 10 relates to an alternative embodiment and shows a plan view of the stator's base plate having three separate radial-alignment features secured thereto; and
Figures 11(a), (b) and (c) relates to an alternative embodiment and Figure 11(a) shows an isometric view of the rotor according to this alternative embodiment, Figure 11(b) shows a cross-sectional view of the rotor and stator at a first ("operational") relative axial configuration wherein the cooperating radial-alignment features are disengaged, and Figure 11(c) shows a cross-sectional view of the rotor and stator at a second ("setup") relative axial configuration wherein the cooperating radial-alignment features are engaged.

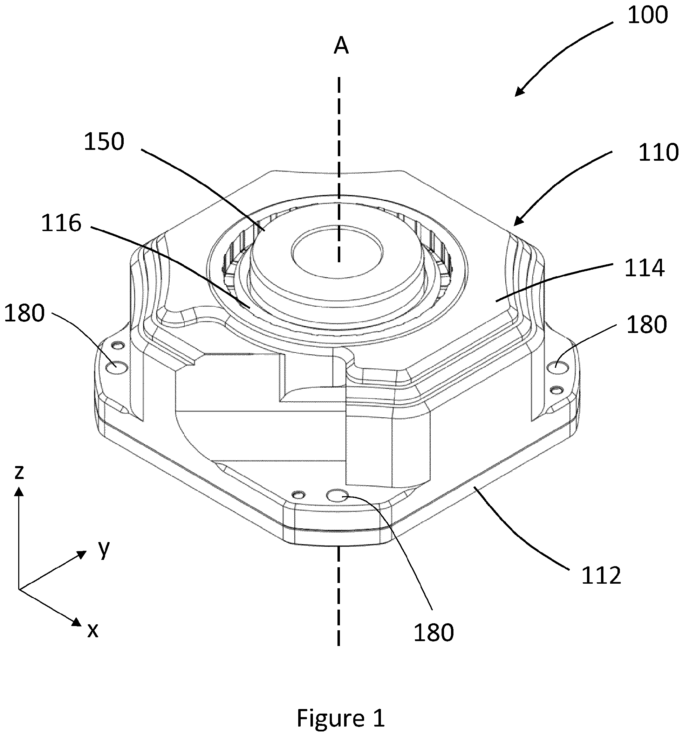

With reference to Figure 1, an example rotary encoder device 100 is shown which comprises a stator 110 and a rotor 150. The stator 110 and rotor 150 are rotatable relative to each other about an axis of rotation A. As explained in more detail below, the stator 110 and rotor 150 are able to move axially relative to each other between a first ("setup") relative axial position and a second ("operational") relative axial position. During installation, the stator 110 and rotor 150 are arranged at their first ("setup") relative axial position so as to put cooperating radial alignment features into engagement so as to arrange the stator 110 and rotor 150 at a predetermined relative radial position. During operation of the rotary encoder device, the rotary encoder device can be used to provide a measure of the relative rotation of a static part of a machine and a rotatable shaft of the machine (i.e. a "machine shaft"). Accordingly, during operation, the stator 110 can be fixed to the static part of a machine (not shown in Figure 1) and the rotor 150 can be fixed to machine shaft (not shown in Figure 1) (wherein the axis of rotation A of the rotary encoder device and the axis of rotation of the machine shaft are substantially coincident). During operation, the stator and rotor will be arranged at their second ("operational") relative axial position, and the rotary encoder device can be used to measure the relative rotation of the shaft and static parts of the machine. As described in more detail below, in the embodiment described, the rotary encoder device 100 is an "enclosed" (or "sealed") rotary encoder device, in that the scale and readhead(s) thereof are contained within a protective housing, but as will be understood this need not necessarily be the case.

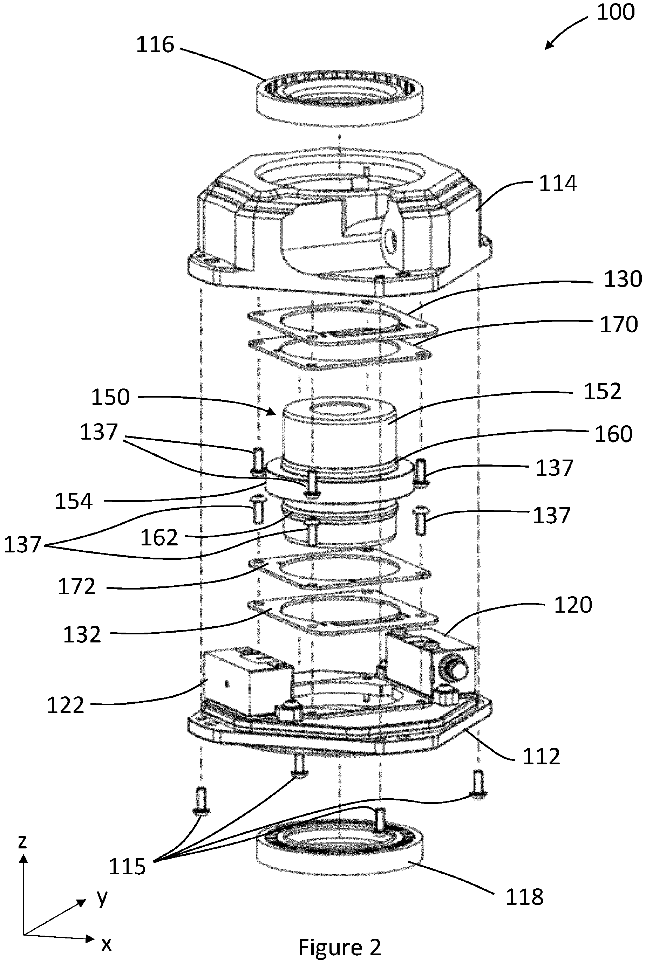

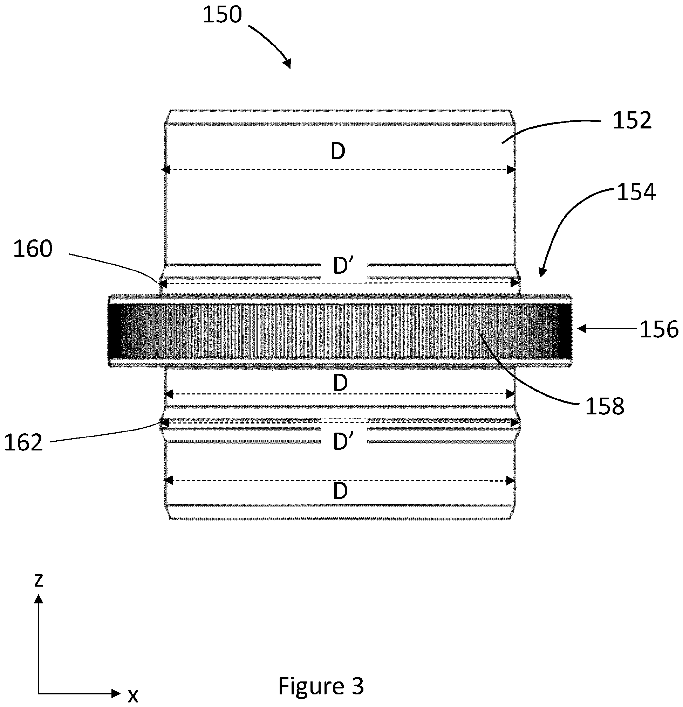

With reference to Figures 2 and 3 the rotor 150 comprises a rotor/encoder shaft 152 having a scale 156 provided on a radially protruding portion 154 of the rotor/encoder shaft 152. For simplicity the rotor/encoder shaft 152 will hereinafter be referred to as the rotor shaft 152. In the embodiment described, the rotor shaft 152 is hollow for receiving the above-mentioned machine shaft (not shown in Figures 2 or 3), but this need not necessarily be the case. In the embodiment described, the scale is what is commonly referred to as "ring scale or "edge read scale" in that the axially extending scale features 158 are formed on an outer cylindrical face of the radially protruding portion 154 of the rotor shaft 152. This is in contrast to "disc scale" where the scale comprises radially extending features provided on a planar face of a disc-like member. However, as will be understood, the invention is also applicable to rotary encoder devices having disc scale. The scale 156 could be absolute or incremental scale, with or without one or more reference marks. The scale 156 could comprise a single scale track or multiple scale tracks. Suitable example scales include magnetic, optical, inductive or capacitive scales. In the embodiment described, the scale is an optical scale, and in particular is a reflective optical scale (although it could be a transmissive scale, which is more commonly associated with disc scales).

The rotor shaft 152 comprises first 160 and second 162 radial-alignment features, which are configured to engage radial-alignment features on the stator (described in more detail below) when the rotor 150 and stator 110 are arranged at a particular relative axial position. Together/collectively, the rotor's radial-alignment features and the stator's radial-alignment features are referred to herein as "cooperating radial-alignment features".

The rotor's first radial-alignment feature 160 is provided at a first axial position along the rotor shaft 152, and the rotor's second radial-alignment feature 162 is provided at a second axial position along the rotor shaft 152, such that they are located on opposite axial sides of the scale 156. In the embodiment described, the first 160 and second 162 radial-alignment features of the rotor 150 comprise a radially-protruding ring having a diameter D' that is greater than the diameter D of the main part of the rotor shaft 152. In the embodiment described, the radially-protruding rings are continuous/un-broken rings that extend around the entire circumference of the rotor shaft 152. Although this need not necessarily be the case (for instance, the first and second radial-alignment features, could comprise one or more radial-protruding features, such as an arc, located at discrete positions around the circumference of the rotor shaft 152), a continuous ring can be beneficial in this embodiment because as described in more detail below, the corresponding radial-alignment features on the stator are provided at discrete circumferential positions. Accordingly, providing at least one of the rotor and stator with radial-alignment features that extend continuously around the circumference avoids the need for the user to have to arrange the rotor and stator at a particular rotational orientation in order for the radial-alignment features on the rotor and stator (described in more detail below) to align and be engageable.

Referring to Figures 1 and 2, the stator 110 comprises a base plate 112 and a cover 114, which when assembled are held together via threaded fasteners 115 (see Figure 2). Upper 116 and lower 118 flexible rotary (e.g. radial lip) seals 116, 118 are provided which when assembled extend across the annular gaps between the stator 110 and rotor 150 for sealing the inside of the stator 110 from contamination located outside thereof. The stator 110 also comprises first 120 and second 122 readheads mounted to the base plate 112. When the rotary encoder device 100 is assembled, the first 120 and second 122 readheads are configured to read the scale 156 at positions located 180° apart from each other about the axis of rotation A. In use, the readheads 120, 122 will be connected to a controller or the like, the signals from which can be used to determine the rotational position (and/or derivatives thereof) of the rotor 150 and stator 110 (and therefore the rotational position, and/or derivatives thereof, of the relatively rotational parts of the machine on which the rotary encoder device is mounted). Cabling for such connection is omitted from the drawings for the sake of clarity. Also, optionally, such connection could be wireless.

As will be understood, although in this embodiment two readheads 120, 122 are provided, alternative embodiments can comprise just a single readhead, or more than two readheads (or comprise a readhead that extends fully around the axis of rotation, for instance as is typically the case with an inductive encoder).

The stator 110 also comprises radial-alignment features provided at first and second axial locations. In particular, the stator comprises first 130 and second 132 radial-alignment plates which provide said radial-alignment features. When assembled, the first radial-alignment plate 130 is arranged on the same axial side of the scale 156 as the first radial-alignment feature 160 on the rotor 150, and the second radial-alignment plate 132 is arranged on the same axial side of the scale 156 as the second radial-alignment feature 162 on the rotor 150. The axial separation of the first 130 and second 132 radial-alignment plates is the same as the axial separation of the first 160 and second 162 radial-alignment features of the rotor 150.

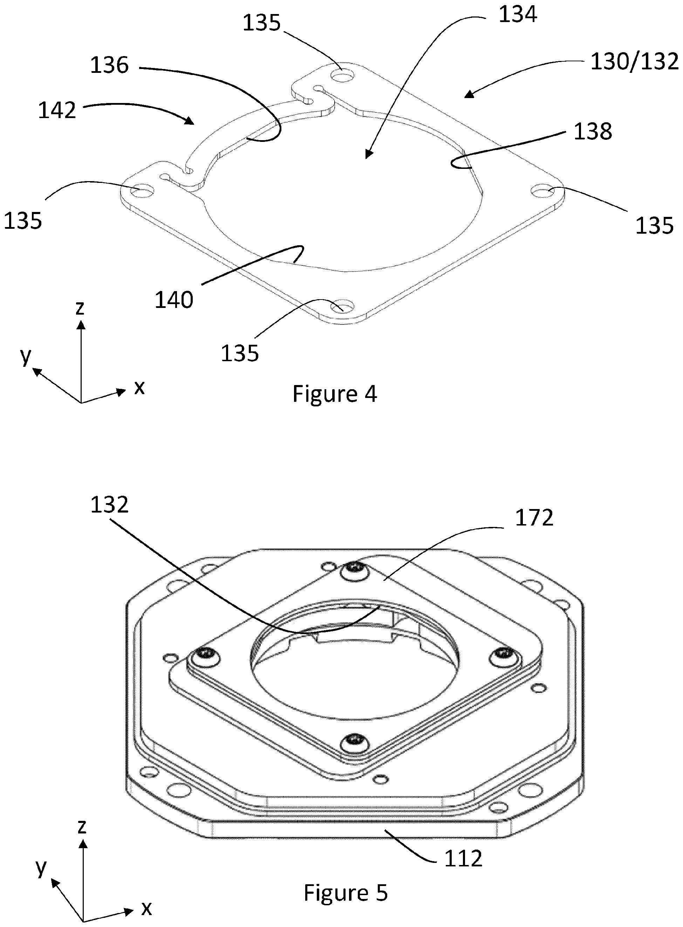

As shown in Figure 4, the first 130 and second 132 radial-alignment plates comprise an axially-extending hole 134 through the centre of the plate, through which the rotor shaft 152 can be received. The hole 134 has a generally circular shape, but has three regions 136, 138, 140 of reduced diameter which, as will be explained in more detail below, form the stator's radial-alignment features (which will also be denoted herein as 136, 138, 140). Fastner holes 135 are provided through which fasteners (e.g. threaded fasteners 137) are passed in order to rigidly fasten the plate to the stator 110.

The first 136 of the stator's radial-alignment features is provided on a spring 142 member which is free to be displaced radially outwardly and provide a reactance force to such radial displacement. Accordingly, the first radial-alignment feature 136 is "resiliently radially compliant". In contrast, the second 138 and third 140 of the stator's radial-alignment features are rigidly fixed in place. The effective diameter of the stator's radial-alignment features 136, 138, 140 (when the spring member 142 is at is relaxed, undeflected state) is larger than the diameter D of the main part of the rotor shaft 152, but is slightly smaller than the diameter D' of the radially-protruding rings 160, 162 of the rotor 150. In particular, the second 138 and third 140 of the stator's radial-alignment features (the radially fixed features) nominally have the same diameter D' of the radially-protruding rings 160, 162 of the rotor 150, and when the spring member 142 is at is relaxed, undeflected state the first radial-alignment feature 136 is provided at a radially offset position so as to provide a smaller diameter than diameter D' such that when the radially-protruding rings 160, 162 of the rotor 150 is located axially in-line with the stator's radial-alignment features 136, 138, 140, the first radial-alignment feature 136 is deflected away from its relaxed, undeflected position so as to provide the above-described spring force.

As illustrated in Figures 2, 5 and 6(b), when assembled, the first radial-alignment plate 130 is sandwiched between a surface of the stator's cover 114 and the first retaining plate 170, and the second radial-alignment plate 132 is sandwiched between a surface of the stator's base plate 112 and the second retaining plate 172.

The first 170 and second 172 retaining plates each have an axially extending hole, the diameter of which is larger than diameter D of the main part of the rotor shaft 152 and also larger than the diameter D' of the radially-protruding rings 160, 162 of the rotor 150. Accordingly, the retaining plates 170, 172 do not contact the rotor 150 at all, in either its axially engaged or axially disengaged axial positions. Sandwiching the radial-alignment plates 130, 132 between a retaining plate and a stator surface adds axial robustness to the radial-alignment plates 130, 132 during the engage/disengage processes of the rotor 150. During the engage/disengages processes, twisting forces are created at the mating interface which could cause the radial-alignment features 136, 138, 140 to deform in the axial direction. This is of particular concern for the first radial-alignment feature 136 which is mounted on a radial spring member 142 and is therefore less axially stiff. The retaining plate provides axial support to such features and therefore helps to reduce/prevent such axial deformation. As will be understood, such retaining plates 170, 172 (or equivalent axial support members) are optional and for instance might not be needed at all if the radial-alignment features 136, 138, 140 of the stator 110 are sufficiently axially stiff (e.g. if they were made of thicker and/or stiffer material). As a further alternative option, an axial support member (e.g. retaining plate) for just the radial spring member could be provided.

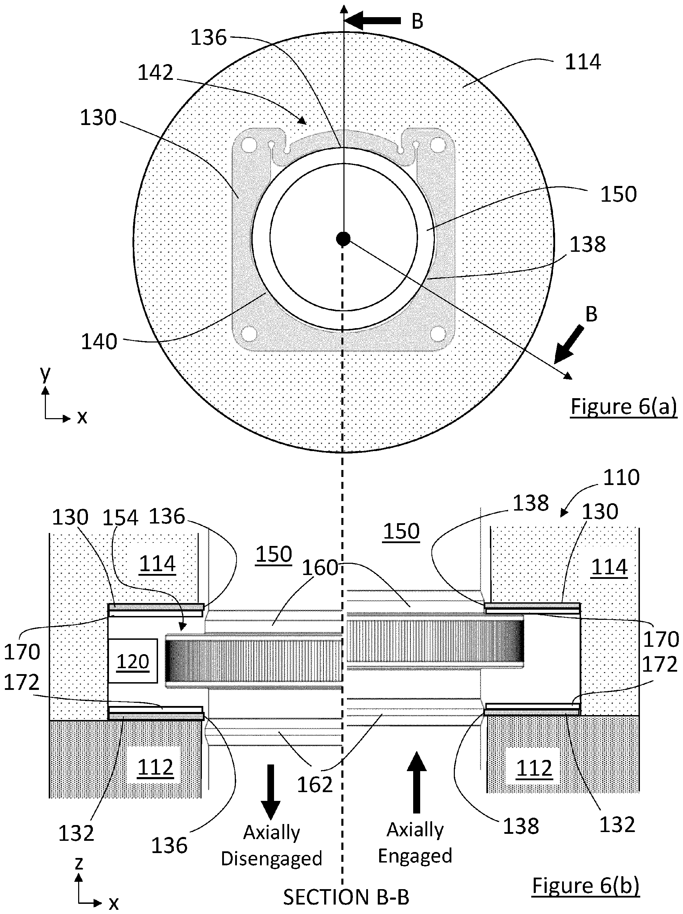

Figure 6(a) illustrates a cross-sectional plan view of the rotary encoder device 100 at a plane containing the first radial-alignment plate 130. Figure 6(b) illustrates a section view along the line B-B shown in Figure 6(a), wherein the right-hand side of Figure 6(b) illustrates the relative configuration of the stator 110 and rotor 150 at a first ("setup") relative axial position at which the cooperating radial-alignment features are engaged so as thereby to constrain the relative radial position of the stator and rotor at a predetermined radial position, and the left-hand side of Figure 6(b) illustrates the relative configuration of the stator 110 and rotor 150 at a second ("operational") relative axial position at which the cooperating radial-alignment features are disengaged and at which the readheads 120, 122 (readhead 122 is not shown in Figure 6(b)) can read the scale 156. As will be understood, it is not necessary for the readheads 120, 122 to be able to read the scale 156 when the stator 110 and rotor 150 are at their first relative axial position. Indeed, in the embodiment described, the axial displacement between the first and second relative axial positions is such that when they are at their first relative axial position, the scale 156 is no longer aligned with the readhead's 120, 122 reading window and therefore the readhead cannot "see" the scale. As will be understood, in an alternative embodiment it can be that the readheads 120, 122 can still see the scale 156 when the stator 110 and rotor 150 are at their first relative axial position. This could be for instance due to the size of the readhead's reading window, the axial extent of the scale, and/or the axial distance between the first and second relative axial positions being such that the readhead can still see the scale in both the first and second relative axial positions. In another embodiment, and as mentioned above, the scale could be "disc scale" where the scale comprises radially extending features provided on a planar face of a disc-like member. Accordingly, in such an embodiment the axial separation, or "rideheight", between the scale and readhead(s) will be different for the first and second relative axial positions.

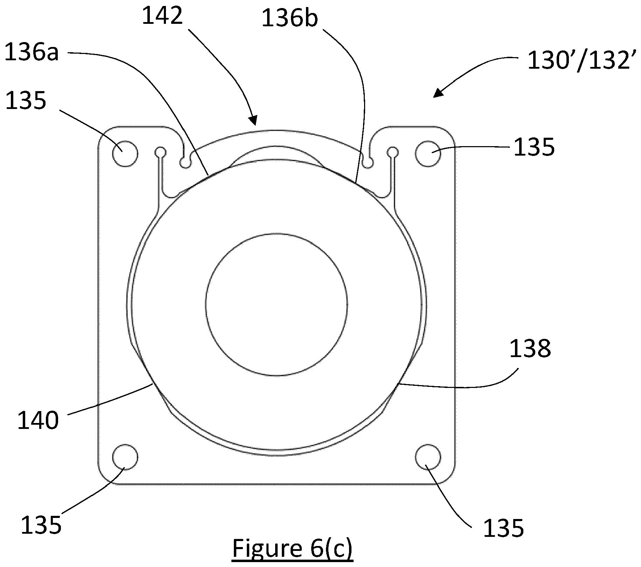

As illustrated by the right-hand side of Figure 6(b), the rotor 150 can be axially displaced (i.e. along the axis of rotation A) to a first relative axial position at which the first 160 and second 162 radial-alignment features on the rotor 150 are caused to engage the first 136, second 138 and third 140 radial-alignment features (i.e. the first, second and third sections of reduce diameter) on the respective first 130 and second 132 radial-alignment plates. When engaged/at the first relative axial position, the first 160 radial alignment feature of the rotor 150 and the first 136, second 138 and third 140 radial-alignment features of the first radial-alignment plate 170 of the stator 110 provide a first set of three points of contact between the rotor 150 and stator 110. Similarly, when engaged/at the first relative axial position, the second 162 radial alignment feature of the rotor 150 and the first 136, second 138 and third 140 radial-alignment features of the second radial-alignment plate 172 of the stator 110 provide a second set of three points of contact between the rotor 150 and stator 110 at a first axial location. In each of the first and second sets of three points of contact, the points of contact are located equiangularly spaced around the axis of rotation A. Furthermore, although for reasons of repeatability performance it can be preferred that there are three points of contact (which are substantially equiangularly spaced about the axis of rotation) provided by each set of rotor/stator cooperating radial-alignment features, this is not essential. For example, there could be as few as two points of contact, or for instance four or more points of contact provided by each set of rotor/stator cooperating radial-alignment features. For instance, the radial alignment plate 130'/132' of Figure 6(c) is configured to provide four points of contact with the rotor. In particular, the radial alignment plate 130'/132' of Figure 6(c) provides first 136a and second 136b radially compliant points of contact, and third 138 and fourth 140 radially rigid points of contact. Similarly, such points of contact do not have to be substantially equiangularly spaced about the axis of rotation.

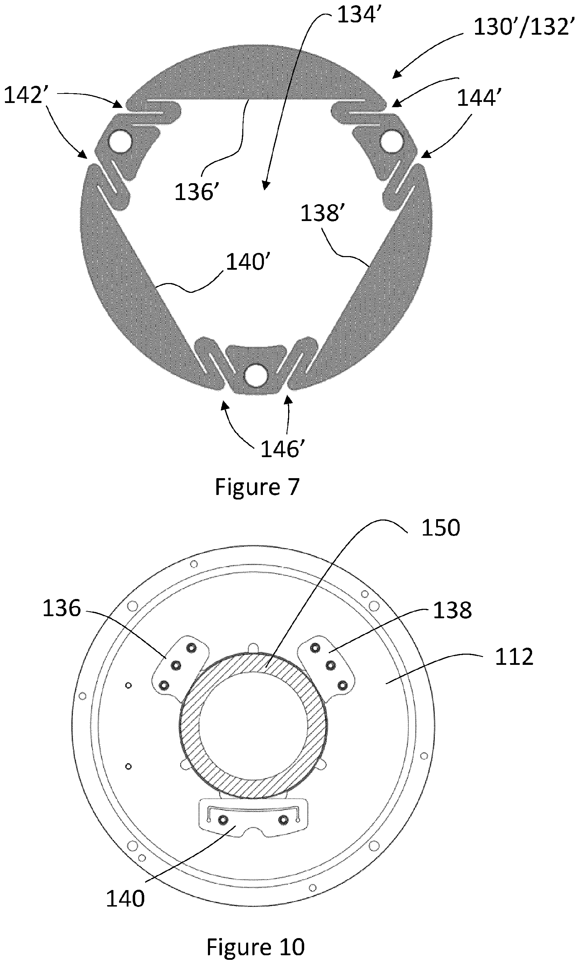

Due to the effective diameter of the first 136, second 138 and third 140 radial-alignment features on the radial-alignment plates 170, 172 being slightly smaller than the diameters of the first 160 and second 162 radial radial-alignment features on the rotor 150, the first radial-alignment feature 136 which is mounted on the radial spring member 142 will be displaced radially outward, which in turn, due to its elasticity, will provide a reactance force which urges the rotor 150 radially into the second 138 and third 140 rigidly mounted radial-alignment features. The second 138 and third 140 rigidly mounted radial-alignment features define a fixed radial position for the rotor 150 when the cooperating radial-alignment features of the rotor and the stator are engaged. Accordingly, due to the fixed nature of the second 138 and third 140 rigidly mounted radial-alignment features on the stator 110, and due to the compliance of the first 136 radial-alignment features, the radial position of the rotor 150 relative to the stator 110 is assured to a high level of repeatability. Although such a configuration can be preferred for reasons of repeatability, this is not essential and for instance, two or all three of the first 136, second 138 and third 140 radial-alignment features on the stator 110 could be mounted on spring members. An example of this is illustrated in Figure 7 which shows a plan view of an example alternative radial-alignment plate 130'/132', which has first 136', second 138' and third 140' radial-alignment features provided on first 142', second 144' and third 146' radial spring members.

In the embodiment described, the rotary encoder device 100 is configured such that the cooperating radial-alignment features can be put into engagement manually by a user pushing the rotor 150 axially relative to the stator 110 until the rotor 150 comes to a stop due to the radially protruding portion 154 (on which the scale 156 is provided) of the rotor 150 coming into contact with the first retaining plate 170 of the stator 110 (at which point the radial-alignment features on the rotor and stator will be engaged with each other). As will be understood, such an axial stop could be provided by other features of the rotor and/or stator, and/or such an axial stop might not be provided at all and could simply require the user to judge when the cooperating radial-alignment features are engaged. Ideally the relative axial-displacement force on the rotor and stator needed to put the cooperating radial-alignment features into engagement is not more than 150 N such that typically a tool will not be required to put them into engagement, and instead they can be put into engagement by hand alone.

In the embodiment described, the rotary encoder device 100 is configured such that the cooperating radial-alignment features form an interference fit at the first relative axial position of the stator 110 and rotor. Accordingly, in other words, in the embodiment described the rotor 150 is held at its axially engaged position by way of frictional forces between the cooperating radial-alignment features on the stator 110 and rotor 150. In particular, the rotary encoder device 100 is configured such that the frictional forces between the cooperating radial-alignment features on the stator 110 and rotor 150 when in their engaged state is sufficient to support the weight of the rotor 150 or stator 110 (whichever is the heavier) such that they do not automatically disengage under their own weight. This can be advantageous because it avoids the need for an additional tool (or for the user to keep applying a force) to keep the cooperating radial-alignment features on the stator 110 and rotor 150 in their engaged state.

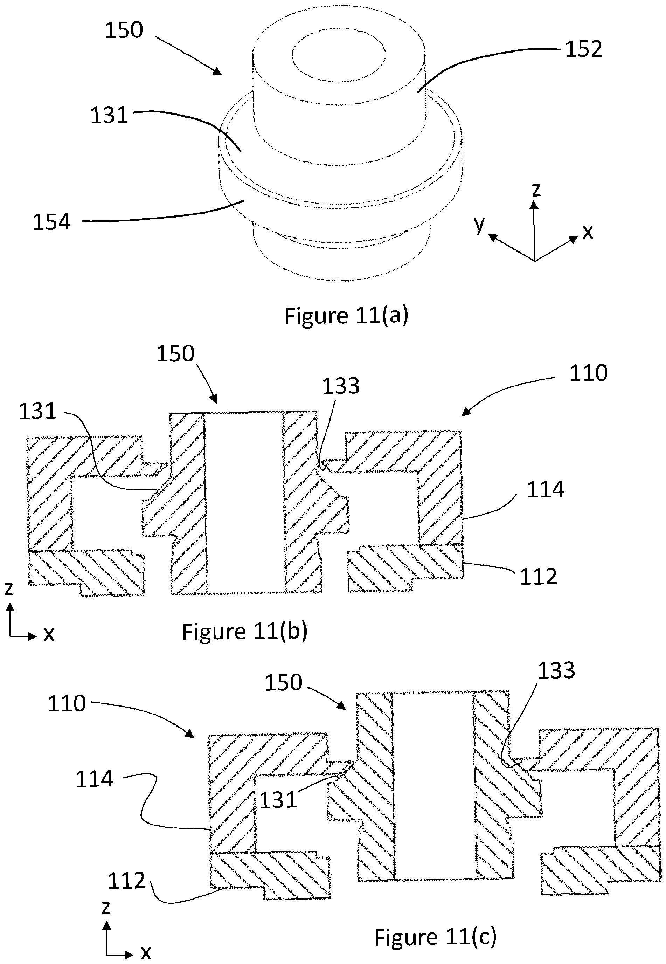

However, as will be understood, although the self-holding configuration and the manual break-out force configuration described can be preferred for reasons of ease of use, such configurations are not essential. For instance, in an alternative embodiment the rotary encoder device 100 could be configured such that it might be necessary to have a tool to cause the cooperating radial-alignment features on the stator 110 and rotor 150 to engage, and/or in order to hold the cooperating radial-alignment features on the stator 110 and rotor 150 in engagement, and/or in order to cause the cooperating radial-alignment features on the stator 110 and rotor 150 to disengage. For instance, in an alternative embodiment illustrated in Figure 11, the cooperating radial-alignment features could comprise mating tapered (e.g. frusto-conical) surfaces 131, 133 on the rotor 150 and stator 110 which engage each other (i.e. come into contact) at an axial position to define a predetermined radial position of the stator and rotor, but which do not offer any frictional resistance to their axial disengagement in a separation direction. In such a case, the rotor 150 might (e.g. depending on the installation orientation) need to be held at its axially engaged position whilst the rotor 150 and/or stator 110 are being fixed to the machine by something other than the cooperating radial-alignment features themselves. For instance, the user could manually hold the radial-alignment features in engagement, and/or a clamp or other holding means/device (which could make use of magnets, for example) could be used to keep them pulled into engagement.

An advantage of the cooperating radial-alignment features of the rotary encoder device 100 is that they can be used to aid an installation (either for the first time, or for a subsequent reinstallation) of the rotary encoder device 100 on a machine in accordance with the rotary encoder device's manufacturer's predetermined criteria. For instance, during installation of the rotary encoder device 100, it can be important to ensure that the stator 110 and rotor 150 have a predetermined radial position in order to achieve the desired level of performance from the rotary encoder device 100. When engaged, the cooperating radial-alignment features of the rotary encoder device 100 constrain the relative radial position of the rotor 150 and stator 110 to a predetermined radial position, the repeatability of which is defined by the configuration of the cooperating radial-alignment features and so which can be dictated by the manufacturer of the rotary encoder device 100.

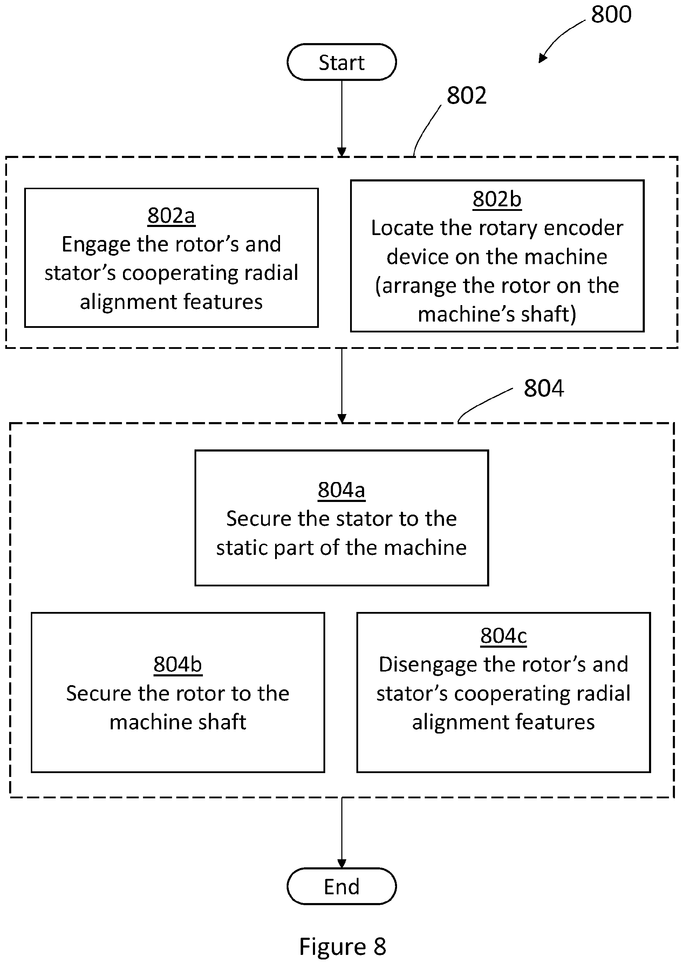

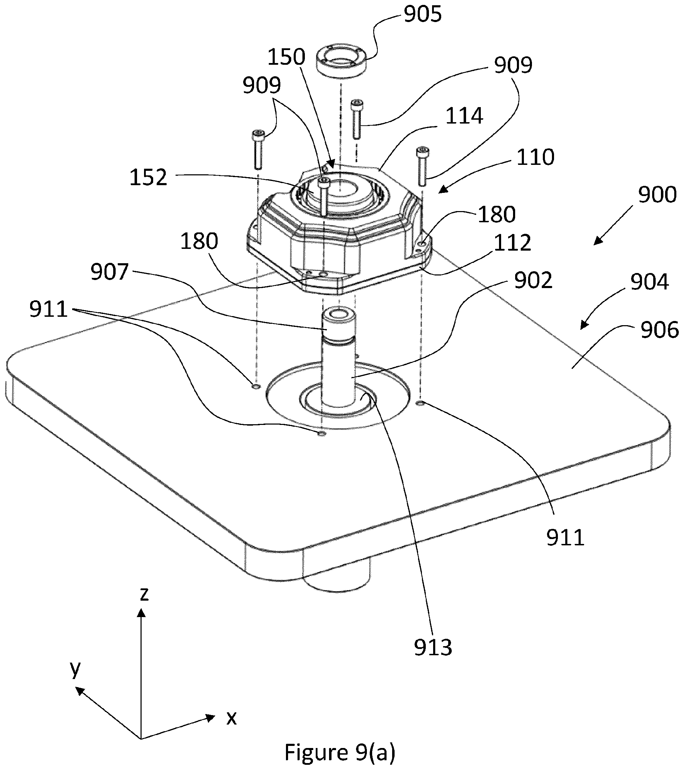

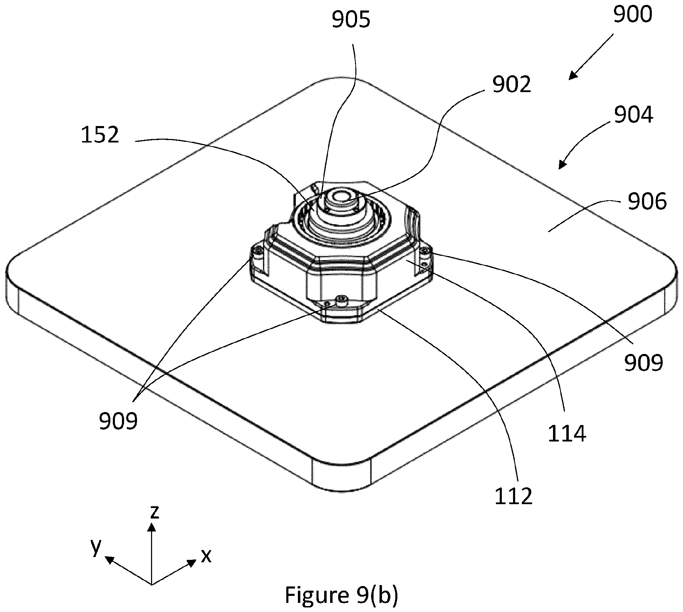

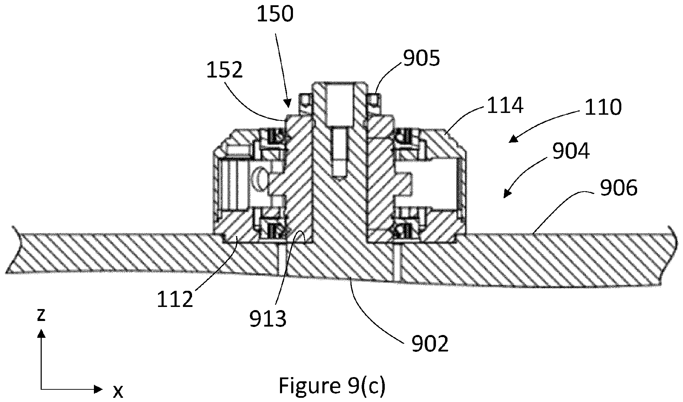

Accordingly, with reference now to Figures 8 and 9, the self-radial-aligning capability of the rotary encoder device 100 described above can be utilised during the installation of the rotary encoder device on a machine 900 (which could be its first installation on the machine 900, or for a reinstallation on the same or another machine). As illustrated in Figure 8, a first stage 802 in the process of installing the rotary encoder device on a machine 900 involves the actions of engaging the rotor's and the stator's cooperating radial alignment features (action 802a) (as explained in detail above), and locating the rotary encoder device 100 on the machine (action 802b). In the embodiment described, locating the rotary encoder device 100 on the machine 900 comprises arranging the rotary encoder device 100 such that the machine shaft 902 passes through the hollow rotor 150, and sliding it axially down until the stator 110 comes to rest on a surface 906 of the static part 904 of the machine 900. In the embodiment described (which is illustrative of a typical scenario) the relative dimensions of the machine's shaft and rotor 150 is such that the rotor 150 is a snug radial-fit on the machine shaft 902 such that its radial position is dictated and fixed by the machine shaft 902 even before they are secured relative to each other via additional fastening means (such as a threaded member, clamp, adhesive or the like). In the embodiment described, the fastening means is a threaded nut 905, which will be described in more detail below.

The order of these two actions 802a, 802b is not important and so they are therefore illustrated in Figure 8 as being part of the same first stage 802. That is, the cooperating radial-alignment features of the stator 110 and rotor 150 could be engaged in order to set the radial position of the stator 110 and rotor 150 either before or after the rotary encoder device has been located on the machine. Either way, once the rotor's and stator's cooperating radial alignment features are engaged and the rotor 150 is located on the machine shaft 902, the user can be confident that the rotor 150 and stator 110 are at the manufacturer's predetermined relative radial position.

Accordingly, the process can then proceed to the second stage 804. Similar to the first stage 802, there are a number of actions 804a, 804b, 804c, the order of which is not necessarily critical, although there can be preferred orders for these actions as explained in more detail below. The actions at this second stage 804 include: fixing the stator 110 to the machine's static part (action 804a); fixing the rotor to the machine shaft (action 804b); and disengaging the rotor's and stator's cooperating radial alignment features (action 804c).

Fixing the stator 110 to the machine's static part (action 804a) could be done, for example, by using fastening means such as a clamp, adhesive, and/or as is the case in this embodiment threaded fasteners 909 which pass through holes 180 in the stator 110 and into threaded holes 911 in the static part 904 of the machine. The holes 180 in the stator for receiving the threaded fasteners 909 are oversized such that the radial/lateral position of the stator on the machine is not tightly constrained by the threaded fasteners 909/the location of the threaded holes 911 on the machine, and therefore the stator 110 has some degree of lateral freedom to adopt the radial position dictated by the cooperating radial alignment features of the stator 110 and rotor 150.

Fixing the rotor 150 to the shaft of the machine (action 804b) can be done, for instance, via fastening means such as a clamp, adhesive clamp and/or as is the case in the described embodiment, via threaded fastener/nut 905.

Disengaging the cooperating radial-alignment features of the stator 110 and rotor 150 (action 804c) can be done by axially displacing the rotor 150 relative to the stator 110. This could be achieved, for example, by the user (installer) pushing down (in the orientation of the drawings) on the rotor.

Optionally, and as is possible with the embodiment described, the actions of securing the rotor 150 to the shaft of the machine (action 804b) and disengaging the rotor's and stator's cooperating radial alignment features (action 804c) can occur contemporaneously. For instance, in the embodiment described, the action of securing the rotor 150 to the shaft 902 of the machine via the threaded nut 905 causes relative axial displacement of the rotor 150 and stator 110. That is the threaded nut 905 slides over and threadingly engages a corresponding threaded portion on the end 907 of the machine shaft 902. As the threaded nut 905 is tightened on the end of the threaded portion 907 of the machine shaft 902, it axially travels downward (in the orientation of the drawings shown) and thereby pushes the rotor 150 axially downwards until the bottom of the rotor 150 comes to rest against a ledge 913 on the machine shaft 902, at which point the rotor's and stator's cooperating radial alignment features will have disengaged.

A preferred order for the actions of the second stage 804 is for action 804a to take place before action 804c. It is possible for action 804a to take place after action 804c (that is the cooperating radial-alignment features of the rotor 150 and stator 110 could be axially disengaged before the stator 110 is secured to the static part of the machine), but this is less desirable because there is the risk that the stator 110 will radially/laterally move relative to the rotor 150 before or during the process of securing the stator to the static part of the machine, resulting in the stator 110 no longer being at the manufacturer's predetermined radial position relative to the rotor.

It can be less important whether action 804b takes place before, after or during step 804c. For instance, it is often (if not typically) the case the relative dimensions of the rotor and machine shaft are such that the rotor 150 is a snug radial fit on the machine shaft such that its radial position is dictated and fixed by the machine shaft even when they have not been secured relative to each other via an additional fastening means (such as a threaded member, clamp, adhesive or the like).

In the embodiment described, there is no integral bearing mechanism between the stator 110 and rotor 150. Accordingly, in use the position between stator 110 and rotor 150 is controlled entirely by the shaft and static parts of the machine (not shown). Accordingly, in order to ensure that the stator 110 and rotor 150 don't rattle around during transit, they can be arranged in their engaged position (and held thereat by a retaining bracket to ensure they don't accidently become disengaged). As will be understood, the invention could also be used in a rotary encoder device having an integral bearing (i.e. a bearing between the rotor and stator) although such devices may have less need for the present invention due to such integral bearings typically being configured to constrain the relative position of the scale and readhead.

In the embodiment described, the radial-alignment features 136, 138, 140 on the stator 110 are provided by a plate 130, 132 such that they are provided via one piece of material. As will be understood, this need not necessarily be the case. For instance, the radial-alignment features could be provided by separate pieces of material which are secured to the stator 110 separately. An example embodiment of this is shown in Figure 10 where separate first 136', second 138' and third 140' radial-alignment features are secured to the stator 110, in particular in the view shown, to the stator's base plate 112. As shown, in this particular embodiment, the first 136' and second 138' radial-alignment features provide rigid points of contact, and the third radial-alignment feature provides a radially compliant point of contact. In another embodiment, the first 136, second 138 and third 140 radial-alignment features could be provided as integrally formed features in the stator 110 (e.g. as integrally formed features in the base plate 112 or cover 114).

In the embodiment described, there are provided two sets of cooperating radial-alignment features; one set (provided by the rotor's first radial-alignment feature 160 and the stator's first radial-alignment plate 130) is provided on a first axial side of the scale 156, and the other set (provided by the rotor's second radial-alignment feature 162 and the stator's second radial-alignment plate 132) is provided on a second, opposing, axial side of the scale 156. However, this need not necessarily be the case. Alternative embodiments include: providing both sets of cooperating radial-alignment features (which are axially separated) on the same side of the scale; providing only one set of cooperating radial-alignment features; providing more than two sets of cooperating radial-alignment features which are located at different axial positions.

In the embodiments described, the points of contact in each set of cooperating radial-alignment features are provided in a plane that extends perpendicular to the axis of rotation. Whilst such an arrangement can be preferred (in order to help balance the forces on the rotor) this need not necessarily be the case, and for instance the points of contact could be arranged a different axial locations.

In the embodiment described, at least one of the cooperating radial-alignment features is resiliently radially compliant. Whilst this can be beneficial (e.g. to help avoid over constraining the rotor and stator when engaged via the cooperating radial-alignment features, which can be beneficial for reasons of repeatability), this need not necessarily be the case. For instance, all of the cooperating radial-alignment features could be resiliently radially rigid.

In the embodiment described, the cooperating radial-alignment features are engaged by relative axial motion alone of the rotor and stator, i.e. no other relative motion or other device is needed to cause their engagement. Such an arrangement is particularly preferred due to the simplicity of operation, but as will be understood other embodiments are within the scope of the invention. For instance, the rotary encoder device could be configured such that the cooperating radial-alignment features are engaged by way of first placing the rotor and stator at a first relative axial position and then, whilst at said first relative axial position, relatively rotating the stator and rotor such that the cooperating radial-alignment features are caused to engage. In such an embodiment, the cooperating radial-alignment features could be disengaged, for example by causing relative rotation of the stator and rotor (e.g. in the opposite direction to that which caused them to engage) and then axially displacing the rotor and stator to a second position at which it is not possible for the cooperating radial-alignment features to be engaged by relative rotation of the stator and rotor.

## Claims

1. A rotary encoder device comprising a stator and a rotor which are rotatable relative to each other about an axis of rotation, one of which comprises a scale and the other of which comprises a readhead for reading the scale via which the relative rotational position of the stator and rotor about said axis can be determined,
wherein the stator and rotor are configured with cooperating radial-alignment features that are configured such that:
at a first relative axial position of the stator and rotor the cooperating radial-alignment features are engageable so as thereby to constrain the stator and rotor at a predetermined relative radial position, and
at a second relative axial position of the stator and rotor the cooperating radial-alignment features are not engageable, wherein the readhead can read the scale at said second relative axial position.

2. A rotary encoder device as claimed in claim 1, configured such that at the first relative axial position of the stator and rotor the cooperating radial-alignment features are engageable so as to form an interference fit.

3. A rotary encoder device as claimed in claim 1 or 2, in which the cooperating radial-alignment features are engageable and disengageable by relative axial displacement alone of the stator and rotor between the first and second relative axial positions.

4. A rotary encoder device as claimed in any preceding claim, wherein when in their engaged state the cooperating radial-alignment features provide a first set of contact points, which comprise points of contact between the stator and rotor at at least three different positions around the axis of rotation.

5. A rotary encoder device as claimed in claim 4, wherein at least one of said points of contact is configured to be resiliently radially compliant.

6. A rotary encoder device as claimed in claim 4 or 5, wherein at least two of said points of contact are configured to be radially rigid.

7. A rotary encoder device as claimed in any of claims 4 to 6, wherein when in their engaged state, the cooperating radial-alignment features provide a second set of contact points , the first and second sets of contact points being located at different axial positions.

8. A rotary encoder device as claimed in claim 7, in which the first and second sets of contact points are located on opposite axial sides of the scale.

9. A rotary encoder device as claimed in any preceding claim, in which the rotary encoder device is an enclosed rotary encoder device, comprising an integral protective housing within which at least the scale of the rotor and the readhead of the stator is located, and wherein there are one or more seals between the rotor and stator, such that the scale and readhead are protected from external contamination.

10. A rotary encoder device as claimed in any preceding claim, which is configured without any integral position-constraining bearings between the stator and rotor when at their second relative axial position, such that a device external to the rotor and stator is required to guide relative rotation of the rotor and stator when at their second relative axial position.

11. An apparatus comprising a machine having a static part and a rotatable part, and a rotary encoder device according to any of the preceding claims, wherein the stator is mounted to the static part of the machine and the rotor is mounted to the rotatable part of the machine.

12. An apparatus as claimed in claim 11 when dependent on claim 10, in which the stator is rigidly mounted to the static part of the machine and the rotor is rigidly mounted to the rotatable part of the machine such that relative rotation of the rotor and stator when at their second relative axial position is guided solely by the static part of the machine and the rotatable part of the machine.

13. A method of mounting to a machine having a static part and a rotatable part, a rotary encoder device according to any of the preceding claims, the method comprising, in any suitable order:
configuring the rotary encoder device such that the rotary encoder device is located on the machine such that its rotor is arranged on the machine's rotatable part and such that the rotary encoder device's rotor and stator are arranged at their first relative axial position such that their cooperating radial-alignment features are engaged such that radial position of the stator is dictated by said cooperating radial-alignment features;
securing the stator to the static part of the machine at the radial position dictated by the cooperating radial-alignment features; and
disengaging the rotor and stator's cooperating radial-alignment features and arranging the rotor and stator are at their second relative axial position such that the rotor and stator are free to rotate relative to each other.
